# FASCICULE DE BREVET EUROPEEN

(11) **EP 1 573 963 B1**
(45) Date de publication et mention de la délivrance du brevet: **10.01.2007**
(21) Numéro de dépôt: 03811397.3
(22) Date de dépôt: 17.11.2003
(51) Int. Cl.: H04L 12/24, H04L 12/26, H04M 17/02

(54) **PROCEDE ET DISPOSITIF DE TRAITEMENT DE DONNEES ECHANGEES ENTRE UNE PLURALITE DE TERMINAUX DE SERVICE ET UN SERVEUR DE SUPERVISION**
VERFAHREN UND VORRICHTUNG ZUR VERARBEITUNG VON ZWISCHEN MEHREREN DIENSTENDGERÄTEN UND EINEM ÜBERWACHUNGSSERVER AUSGETAUSCHTEN DATEN
METHOD AND DEVICE FOR PROCESSING DATA EXCHANGED BETWEEN A PLURALITY OF SERVICE TERMINALS AND A SUPERVISING SERVER

(30) Priorité: 19.11.2002 FR 0214472
(43) Date de publication de la demande: 14.09.2005
(73) Titulaire: SCHLUMBERGER Systèmes, 92120 Montrouge (FR)
(72) Inventeur: GNELECOUMBAGA, Souleymane, F-94470 Boissy Saint Léger (FR)
(74) Mandataire: Weihs, Bruno Konrad
(86) Numéro de dépôt international: PCT/EP2003/050843
(87) Numéro de publication internationale: WO 2004/047367

(56) Documents cités:
- FR-A- 2 820 261
- US-A- 5 020 097
- WILLIAMS L D L: "PAYPHONE REMOTE MANAGEMENT SYSTEMS" BRITISH TELECOMMUNICATIONS ENGINEERING, BRITISH TELECOMMUNICATIONS ENGINEERING. LONDON, GB, vol. 11, no. PART 2, 1 juillet 1992 (1992-07-01), pages 85-89, XP000297298 ISSN: 0262-401X
- TACEY P A ET AL: "Mobile payphone system" TENCON '92. ''TECHNOLOGY ENABLING TOMORROW: COMPUTERS, COMMUNICATIONS AND AUTOMATION TOWARDS THE 21ST CENTURY.' 1992 IEEE REGION 10 INTERNATIONAL CONFERENCE. MELBOURNE, VIC., AUSTRALIA 11-13 NOV. 1992, NEW YORK, NY, USA,IEEE, US, 11 novembre 1992 (1992-11-11), pages 413-417, XP010067467 ISBN: 0-7803-0849-2

## Description

La présente invention se rapporte au traitement de données échangées entre un parc de terminaux de service déployé en réseau sur une zone géographique choisie et un serveur de supervision, et en particulier au traitement des données dimensionnelles relatives à l'organisation et/ou l'exploitation des terminaux de service dans le réseau en fonction des données factuelles relatives à l'activité des terminaux.

Elle trouve une application dans le traitement des informations d'un réseau de téléphonie publique, d'un réseau d'horodateurs ou analogues.

D'une manière générale, un réseau de téléphonie publique comporte un (ou plusieurs) ordinateur central ou serveur de gestion et de supervision, appelé ici serveur PMS (acronyme en anglo-saxon de Payphone Management system), permettant la supervision des différents terminaux de services (téléphones publics) repartis sur une zone géographique donnée du réseau, comme décrit, par exemple, dans le document US-A-5 020 097.

Généralement, le réseau de téléphonie publique est déployé selon des dimensions organisationnelles de la zone géographique concernée. Ces dimensions, appelées également hiérarchies, sont relatives à l'organisation, l'exploitation, la localisation et l'installation des terminaux sur ladite zone géographique. Par exemple, sur le réseau d'un opérateur, les téléphones publics sont repartis géographiquement, par catégorie fonctionnelle et par groupe de maintenance ou d'exploitation.

En pratique, les téléphones publics communiquent au serveur PMS des données factuelles relatives à leur activité, par exemple un rapport d'activité détaillant des faits d'exploitations, tels que le montant, la durée d'une communication. Les téléphones publics communiquent également sous forme de rapport d'alarme des événements de dérangement ou de dysfonctionnement (panne, acte de vandalisme, etc.) pouvant nécessiter l'intervention d'un agent de maintenance.

Le serveur PMS quant à lui transfert aux téléphones publics des fichiers, des tables de tarifs ou de mise à jour de programme faisant fonctionner les microprocesseurs des téléphones. Le serveur PMS gère également les fiches d'identité des téléphones publics dans lesquelles figurent les données dimensionnelles relatives notamment à l'installation, l'exploitation, la localisation, la maintenance, et le type du terminal.

Chaque téléphone public génère dans le temps des alarmes qui sont caractérisées par le type d'alarme et par la sévérité de l'alarme. L'état fonctionnel et physique du téléphone public change au cours du temps.

Chaque utilisation du téléphone public génère des transactions et des compteurs statistiques dans le temps. Ces compteurs et transactions contiennent des informations détaillées relatives à cette utilisation telles que date d'appel, durée, coût de l'appel, type et nature de l'appel, destination d'appel, etc....

Aujourd'hui, la gestion de ces informations au niveau du serveur PMS se limite essentiellement à la consolidation événementielle ou agrégation restreinte de ces informations.

Le demandeur s'est posé le problème de prendre en compte et de traiter davantage de données contenues dans ces informations, notamment l'aspect hiérarchique des faits, l'aspect métier des données et les historiques des changements, en vue d'améliorer encore l'exploitation technique et commerciale d'un tel réseau.

La présente invention apporte justement une solution à ce problème.

Elle porte sur un procédé de traitement de données échangées entre une pluralité de terminaux de services et au moins un serveur de supervision, les terminaux de services étant répartis géographiquement dans un réseau de communication et aptes à communiquer au serveur de supervision des données dimensionnelles relatives à l'organisation et/ou l'installation des dits terminaux et des données factuelles relatives à l'activité desdits terminaux et/ou à des événements choisis.

Selon une définition générale de l'invention, le procédé comprend les étapes suivantes :
-i) collecter au niveau du serveur de supervision les données dimensionnelles et les données factuelles de chaque terminal à une fréquence choisie,
-ii) pour chaque terminal, comparer les données dimensionnelles ainsi collectées avec les données dimensionnelles collectées à la séquence précédente, et
-iii) en cas de changement des données dimensionnelles, traiter les données factuelles selon des règles de gestion choisies, par exemple dépendantes des changements des données dimensionnelles.

Le procédé selon l'invention permet donc de distinguer dans la fiche d'identité du terminal les données factuelles et les données dimensionnelles qui lui sont associées et de prendre en compte les changements dans les données dimensionnelles afin d'améliorer l'exploitation technique et commerciale du parc de terminaux.

En pratique les données dimensionnelles appartiennent au groupe formé par les caractéristiques géographiques du terminal, les caractéristiques du type de terminal, les caractéristiques de localisation du terminal, les caractéristiques du groupe de maintenance ou d'exploitant du terminal ainsi que les caractéristiques du type d'installation du terminal.

Par exemple, les données factuelles appartiennent au groupe formé par les alarmes, les compteurs, les statuts, les transactions, les informations temporelles des faits.

Selon une autre caractéristique de l'invention, les règles de traitement des changements dans les données dimensionnelles sont relatives au changement de dates de vie du terminal, notamment la date de première prise en compte du terminal dans le traitement selon l'invention, la date de changement observé et la date d'effacement.

Grâce au procédé selon l'invention, la mise en place de l'organisation des données autour des données factuelles (faits) et des données dimensionnelles (dimensions) permet à l'utilisateur de l'opérateur de les explorer sur différents "niveaux d'analyse" et ce en fonction du temps grâce à des indicateurs qui sont par exemple des informations quantitatives des faits (effectifs ou moyennes) selon des axes d'analyse (hiérarchies / dimensions).

Selon un autre aspect de l'invention, le procédé comprend des règles de traitement de données relatives à la première apparition du terminal dans le traitement, à l'effacement du terminal, à la gestion des changements de données dimensionnelles et au calcul d'indicateurs.

La présente invention a également pour objet un dispositif de traitement de données échangées entre une pluralité de terminaux de services et au moins un serveur de supervision, les terminaux de services étant répartis géographiquement dans un réseau de communication et aptes à communiquer au serveur de supervision des données dimensionnelles relatives à l'organisation et/ou l'installation desdits terminaux et des données factuelles relatives à l'activité desdits terminaux et/ou à des événements choisis.

Selon un autre aspect de l'invention, le dispositif de traitement comprend:
- des premiers moyens de traitement formant collecteur pour collecter au niveau du serveur de supervision les données dimensionnelles et les données factuelles de chaque terminal à une fréquence choisie,
- des seconds moyens de traitement formant accumulateur, aptes, pour chaque terminal, à comparer les données dimensionnelles ainsi collectées avec les données dimensionnelles collectées à la séquence précédente,
- des troisièmes moyens de traitement formant présentateur, aptes en cas de changement des données dimensionnelles, à traiter les données factuelles selon des règles de gestion dépendantes des changements des données dimensionnelles.

En pratique, les seconds moyens de traitement gèrent les faits d'historique. Ils constituent l'entrepôt de données, appelé DataWarehouse en anglo-saxon.

De préférence, les troisièmes moyens de traitement présentent les données d'une manière appropriée permettant de former des requêtes spécifiques au domaine des terminaux, par exemple la téléphonie. C'est à ce niveau que sont constitués les magasins de données, appelés DataMart en anglo-saxon.

Selon encore une autre caractéristique de l'invention, en cas de rupture de la chaîne de collection/alimentation, le dispositif de traitement comprend en outre des automates d'états permettant la reprise partielle ou totale du traitement depuis les états concernés.

En pratique, les premiers moyens de traitement sont aptes à extraire les informations de manière différentielle de la base de connaissances événementielles du serveur PMS et de les mettre à la disposition des seconds moyens de traitement.

La collection différentielle est faite au niveau du module d'extraction, résidant sur chaque serveur PMS et s'exécutant de manière asynchrone, en mémorisant les états de la dernière extraction de chaque donnée factuelle pour chaque terminal. Ainsi, sur deux extractions consécutives, seul le différentiel est pris en compte grâce à cette règle. Cette mémorisation permet également de gérer les cas de reprise.

En pratique, les seconds moyens de traitement sont aptes à générer une base de connaissance différente de celle générée par le serveur de supervision PMS et permettant une application davantage orientée métier que supervision.

D'autres caractéristiques et avantages de l'invention apparaîtront à la lumière de la description détaillée ci-après et des dessins dans lesquels :
- la figure 1 représente schématiquement un réseau de téléphonie publique,
- la figure 2 représente schématiquement les trois principaux compartiments du dispositifs de traitement selon l'invention,
- la figure 3 représente schématiquement le premier compartiment selon l'invention,
- la figure 4 illustre schématiquement une fiche d'identité d'un terminal selon l'invention,
- la figure 5 illustre schématiquement le stockage de la fiche d'identité de la figure 4 pour la première fois dans le second compartiment formant accumulateur selon l'invention,
- la figure 6 illustre schématiquement les changements intervenus dans la fiche d'identité de la figure 4, et
- la figure 7 illustre schématiquement la gestion de deux terminaux selon l'invention.

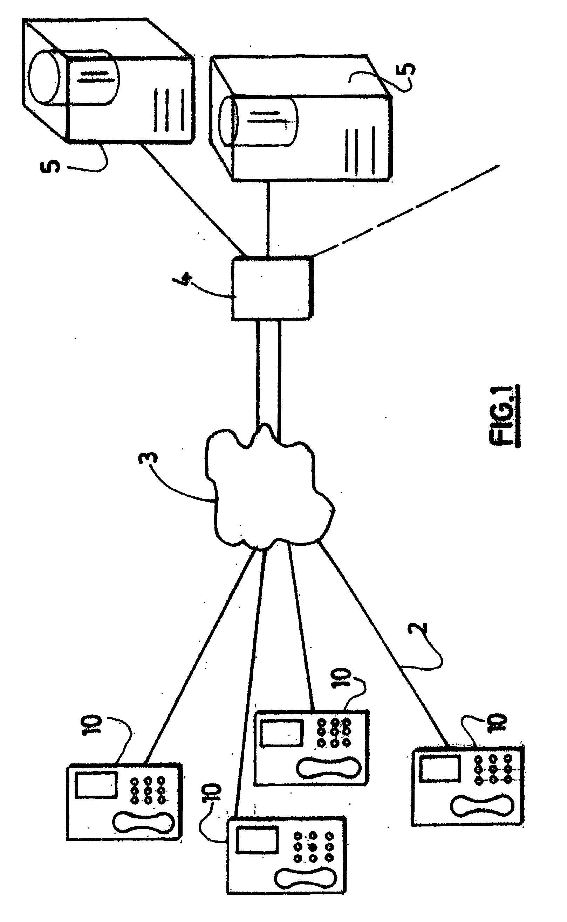

En référence à la figure 1, on a représenté un réseau 1 de téléphonie publique comprenant un parc de téléphones publics 10 déployés en réseau sur une zone géographique choisie 2.

Les téléphones 10 permettent aux usagers d'effectuer des communications téléphoniques, en utilisant un réseau téléphonique approprié 3, du type commuté analogique ou commuté numérique. Le réseau peut également être constitué par un réseau de téléphonie mobile ou encore par le réseau Intemet ou tout autre réseau de communication ou combinaison de réseaux de communication.

Les téléphones publics 10 peuvent également être adaptés pour accéder à des serveurs d'informations ou de fourniture de services de l'Internet ainsi qu'à des serveurs d'informations ou de fourniture de services résidant sur des réseaux privés.

Les téléphones publics 10 sont adaptés pour communiquer avec un ou plusieurs serveurs de supervision 5, appelés PMS (acronyme anglo-saxon de «Payphone Management System ») dédiés au fonctionnement et à la gestion du réseau de téléphonie publique 1.

Le serveur PMS 5 a pour fonction d'échanger avec le parc de téléphones publics 10 des informations concernant leur fonctionnement via le cas échéant une liaison spécialisée et un serveur 4.

Le réseau de téléphonie publique 1 est déployé selon des dimensions organisationnelles de la zone géographique concernée 2. Ces dimensions, appelées également hiérarchies, sont relatives à l'organisation, l'exploitation, la localisation et l'installation des terminaux 10 sur ladite zone géographique. Par exemple, sur le réseau d'un opérateur, les téléphones publics 10 sont repartis géographiquement, par catégorie fonctionnelle (téléphone d'intérieur ou d'extérieur) et par groupe de maintenance (un groupe de techniciens est en charge de plusieurs terminaux pour des interventions sur le terrain) ou d'exploitation (les téléphones sont regroupés indépendamment de leur répartition géographique et de leur catégorie).

En pratique, les téléphones publics 10 communiquent au serveur PMS 5 des données factuelles relatives à leur activité, par exemple un rapport d'activité détaillant des faits d'exploitations, tels que le montant, la durée d'une communication. Les téléphones publics communiquent également sous forme de rapport d'alarme des événements de dérangement ou de dysfonctionnement (panne, acte de vandalisme, etc.) pouvant nécessiter l'intervention d'un agent de maintenance.

Le serveur PMS 5 quant à lui transfert aux téléphones publics 10 des fichiers, des tables de tarifs ou de mise à jour de programme faisant fonctionner les microprocesseurs des téléphones. Le serveur PMS 5 gère également les fiches d'identité des téléphones publics dans lesquelles figurent les données dimensionnelles relatives notamment à l'installation, l'exploitation, la localisation, la maintenance, et le type du terminal.

Chaque téléphone public 10 génère dans le temps des alarmes qui sont caractérisées par le type d'alarme et par la sévérité de l'alarme. L'état fonctionnel et physique du téléphone public change au cours du temps.

Chaque utilisation du téléphone public 10 génère des transactions et des compteurs statistiques dans le temps. Ces compteurs et transactions contiennent des informations détaillées relatives à cette utilisation telles que date d'appel, durée, coût de l'appel, type et nature de l'appel, destination d'appel, etc....

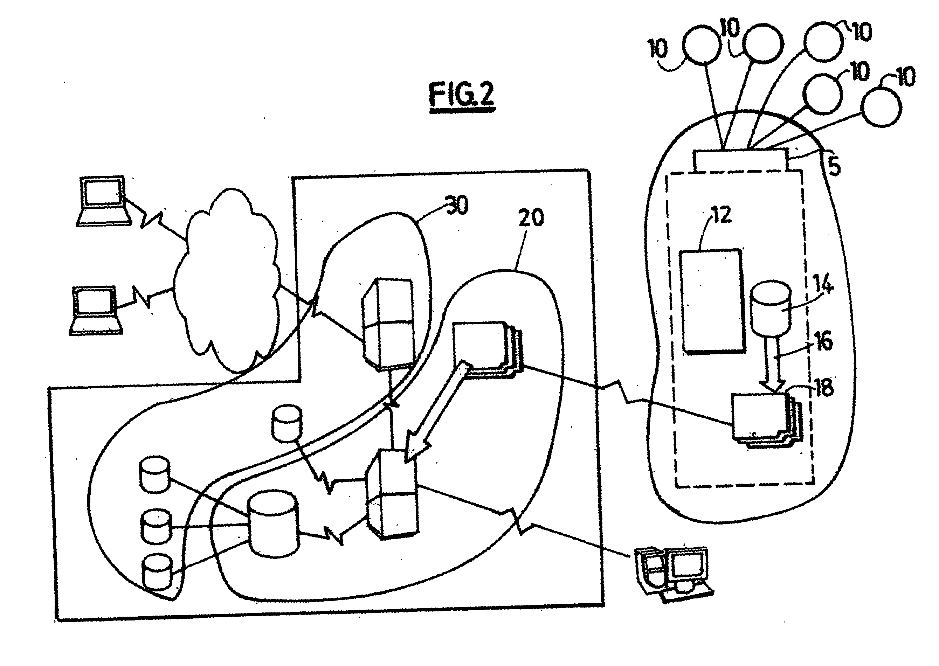

En référence à la figure 2, le serveur PMS 5 collecte les informations émanant des téléphones publics 10.

L'architecture du traitement des données factuelles et dimensionnelles de chaque terminal est basée sur trois principaux compartiments.

Le premier compartiment, logé dans le serveur PMS 5, collecte les informations à une fréquence voulue. Il comprend un module de collection 12 que l'on décrira plus en détail ci-après

Le second compartiment 20, formant accumulateur, gère les faits d'historique. Il constitue l'entrepôt des données, appelé aussi « DataWarehouse ».

Le troisième compartiment 30, formant présentateur, présente les données organisées selon le traitement conforme à l'invention et permet ainsi des questions ou requêtes spécifiques dites « métiers » relatives à un domaine choisi (ici la téléphonie). C'est dans ce compartiment que sont constitués les magasins de données, appelés « DataMart ».

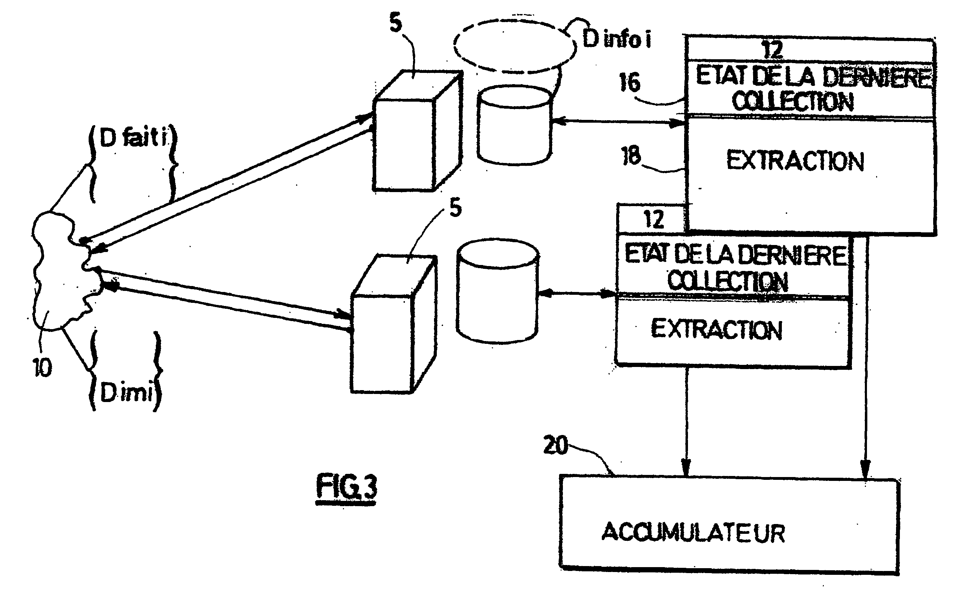

En référence à la figure 3, la collection des données dans le premier compartiment 12 consiste à extraire les informations Dinfoi de manière différentielle de la base de connaissance événementielle 14 du serveur PMS 5 et de les mettre à la disposition du second compartiment 20.

Les données d'informations Dinfoi émanant du serveur PMS contiennent les données factuelles Dfaiti et les données dimensionnelles Dimi de chaque terminal 10i.

La collection différentielle est faite au niveau du module d'extraction 12, résidant dans chaque serveur PMS 5. La collection différentielle s'exécute de manière asynchrone en mémorisant les états de la dernière extraction 16 de chaque donnée factuelle ou « fait » pour chaque terminal.

De préférence, la collection différentielle comprend les étapes suivantes :
- a) vérifier les conditions de démarrage (contrainte par rapport à la période voulue),
- b) en cas de précédente extraction correctement effectuée, opérer une extraction différentielle sinon en cas de précédente extraction incorrectement effectuée, opérer une extraction depuis le dernier état correctement effectué,
- c) si l'extraction se passe correctement, effectuer alors une trace des derniers faits extraits pour tous les terminaux.

Cette trace de l'état des derniers faits extraits d'un terminal est effectuée par la mise à jour d'une matrice "Terminal / type de fait / temps et statut de la dernière extraction".

Ainsi, sur deux extractions consécutives, seul le différentiel est pris en compte grâce à cette règle. Cette mémorisation permet également de gérer les cas de reprise.

En pratique, les seconds moyens de traitement (accumulateur) sont aptes à générer une base de connaissance différente de celle générée par le serveur de supervision PMS et permettant une application davantage orientée métier que supervision.

Le tableau ci dessous présente les caractéristiques de la base de connaissance de l'accumulateur.

| **Base du serveur PMS** | **Base de l'accumulateur** |
|---|---|
| Relationnelle | Relationnelle et multi dimensionnelle |
| Application orientée production et | Application orientée métier des opérateurs |
| Supervision | |
| | |
| Besoins opérationnels | Besoins d'analyses, aide à la décision |
| | |
| Utilisateurs bien déterminés | Utilisateurs différents et nombreux |
| | |
| Fonctionnalités figées | Besoins récurrents mais aussi ponctuels |
| | |
| Une sollicitation du serveur PMS peut | Une sollicitation peut correspondre à la |
| correspondre à une modification ou | lecture de une ou plusieurs entités, |
| insertion d'un ou plusieurs | souvent dans leur totalité |
| enregistrements dans une ou plusieurs | |
| entités. | |

Le procédé selon l'invention distingue dans la fiche d'identité du terminal les données factuelles Dfaiti et les données dimensionnelles Dimi qui lui sont associées et prend en compte les changements dans les données dimensionnelles Dimi afin d'améliorer l'exploitation technique et commerciale du parc de terminaux.

En pratique, les données dimensionnelles Dimi appartiennent au groupe formé par les caractéristiques géographiques du terminal, les caractéristiques du type de terminal, les caractéristiques de localisation du terminal, les caractéristiques du groupe de maintenance ou d'exploitant du terminal ainsi que les caractéristiques du type d'installation du terminal.

Par exemple, les données factuelles Dfaiti appartiennent au groupe formé par les alarmes, les compteurs, les statuts, les transactions, les informations temporelles des faits.

Des règles de traitement des changements dans les données dimensionnelles sont prévues afin d'organiser les données en vue d'une analyse que l'on décrira plus en détail ci-après.

Par exemple, les règles de traitement ou de gestion des changements sont relatives au changement de dates de vie du terminal, notamment la date de première prise en compte du terminal dans le traitement selon l'invention, la date de changement observé et la date d'effacement.

De préférence, tous les critères d'analyses corrélés entre eux sont regroupés au sein d'une même dimension et des dimensions communes sont partagées entre plusieurs domaines fonctionnels. Par exemple, la dimension type de terminal peut connecter des données factuelles financières et trafic à un type de terminal permettant ainsi de remonter la chaîne d'une analyse aux différents regroupements de terminaux (famille, gamme, catégorie, etc....).

L'accumulateur 20 ainsi construit peut évoluer (ajout de nouveaux faits, ajout de critères d'analyse ou de nouvelle dimension) sans remettre en question l'existant.

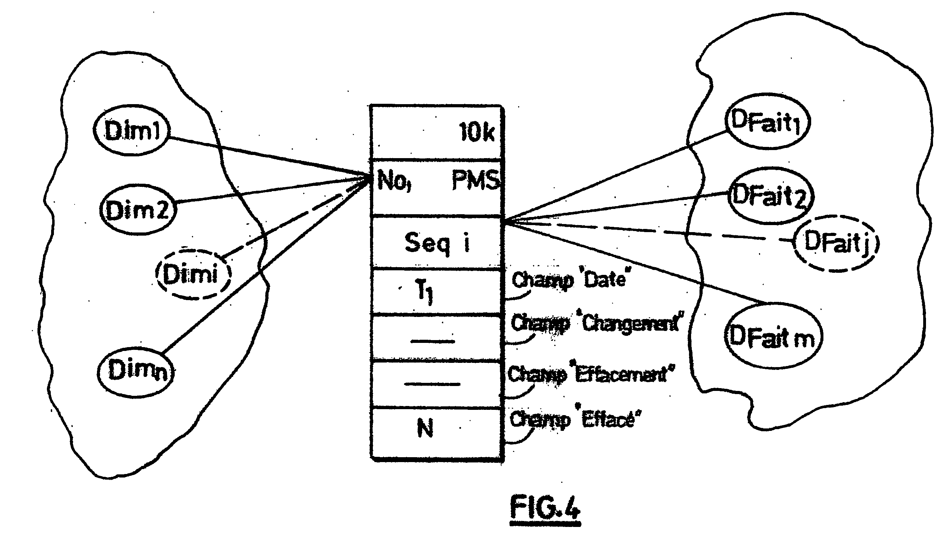

En référence à la figure 4, un terminal 10k est identifié dans l'accumulateur 20 de manière unique, par exemple par un code composé notamment de son numéro d'appel, du code du serveur PMS qui le supervise et de la date de sa première initialisation.

Grâce au procédé selon l'invention, la mise en place de l'organisation des données autour des données factuelles (faits) et des données dimensionnelles (dimensions) permet à l'utilisateur de l'opérateur de les explorer sur différents "niveaux d'analyse" et ce en fonction du temps grâce à des indicateurs qui sont par exemple des informations quantitatives des faits (effectifs ou moyennes) selon des axes d'analyse (hiérarchies / dimensions).

Les indicateurs sont des informations quantitatives des faits Dfaiti (effectifs ou moyennes) selon les axes d'analyse (hiérarchie/dimension).

Le procédé comprend en outre des règles de traitement de données relatives à la première apparition du terminal dans le traitement, à l'effacement du terminal, à la gestion des changements de données dimensionnelles et au calcul des indicateurs.
La règle de gestion de première apparition est basée par exemple sur les dispositions suivantes.

Lorsqu'un terminal 10 est remonté pour la première fois par le module d'extraction, la fiche d'identité du terminal 10 est traitée de manière à créer une clé technique Seq i pour cette fiche à la date correspondant à l'extraction.

La clé comprend en outre un champ « Date » contenant la date de première apparition. Le champ « Date » est renseigné ici à la date du jour T1.

La clé comprend aussi un champ de date de « changement ». Le champ date de changement est ici renseigné à blanc.

La clé comprend également un champ « date d'effacement ». Le champ « date d'effacement » est ici renseigné à blanc.

Un champ relatif au statut effacé est également prévu, Il est ici à Non(N).

Tous les faits Dfaitj sont rattachés à la séquence Seq i au lieu d'être simplement rattachés au numéro du terminal comme dans les structures antérieures.

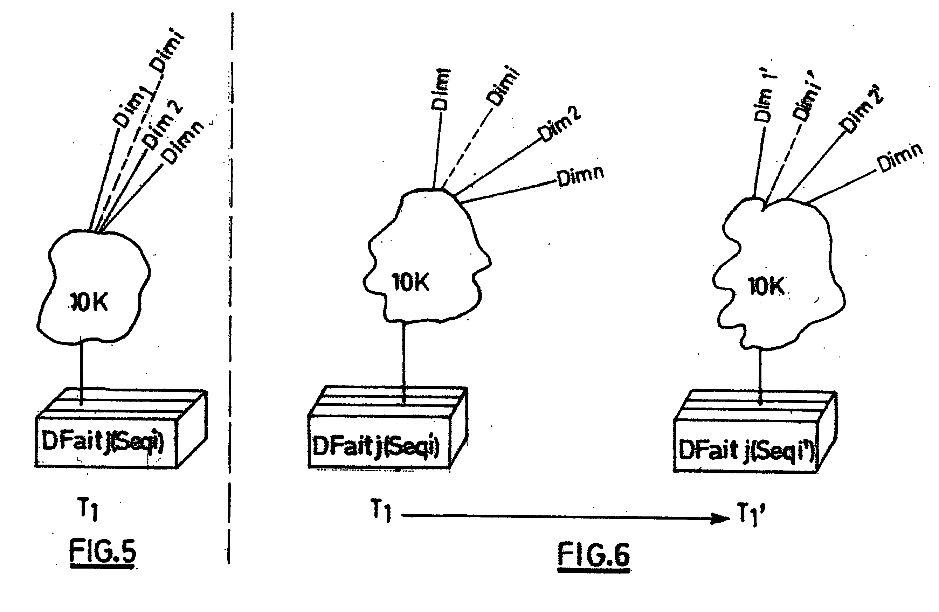

En référence à la figure 5, la fiche d'identité du terminal est stockée dans l'accumulateur 20 à la date T1 correspondant à la première apparition du terminal 10k dans l'accumulateur.

Si pour cette première apparition du terminal 10k, ledit terminal 10k est constaté effacé dans l'accumulateur 20, des règles de gestion de l'effacement sont appliquées de la manière suivante.

La dernière séquence du terminal est identifiée dans la base de connaissance de l'accumulateur. La date d'effacement est mise à jour à la date d'événement de l'effacement (T2) et le statut d'effacé est mis à oui (Y).

La règle de gestion de la première apparition peut s'exprimer sous la forme du tableau ci-dessous.

| **Séquence** | **Terminal (Dimensions/Faits)** | **Date de Première apparition** | **Date de Changement** | **Date d'effacement** | **Satut d'effacement** |
|---|---|---|---|---|---|
| Seq_***i*** | PF(Pfno,Dim***1***, ..., Dim***n*** ; Fait***1***, .., Fait***m***) | T1 | - | T2 | Y |

Pour une modification sur l'une ou plusieurs dimensions du terminal, la gestion de l'historique de changement se fait selon les règles suivantes (figure 6).

Tout d'abord, la dernière séquence du terminal est identifiée Seq i. Un nouvel enregistrement est créé à partir d'une copie du même terminal puis une nouvelle séquence est créée pour cette copie Seq i'. Ensuite la ou les dimensions changée pour cette ligne Dim i' sont mises à jour. La date de changement est renseignée à blanc et la date de la première apparition est renseignée à la date du jour T1'.

Ensuite, pour le terminal identifié Seq_i, dont copie à été faite, la date de changement est mise à jour à la date du jourT1'. Tous les faits postérieurs à la date T1' sont rattachés à la séquence Seq i' au lieu de la séquence Seq_i.

La règle de gestion de l'historique de changement peut s'exprimer sous la forme du tableau ci-dessous.

| **Séquence** | **Terminal (Dimensions/Faits)** | **Date de premi ère apparition** | **Date de changement** | **Date d'effacement** | **Satut d'effacement** |
|---|---|---|---|---|---|
| Seq_***i*** | PF(Pfno,Dim***1***, ..., Dim*n* ; Fait*1*, ..., Fait*m*) | T1 | **T1'** | - | N |
| Sec_***i*** " | PF(Pfno,Dim***1***'; Dim***2***'; Dim*n*; Fait*1*, ..., Fait*m*) | **T1'** | - | - | N |

Une des implications de ces règles est qu'un terminal Pfno peut correspondre à plusieurs lignes d'informations dans la base de l'accumulateur. Chacune des lignes est une conséquence d'un changement observé sur l'une de ses dimensions.

Ces règles de gestion des dates de changement permettent d'effectuer des analyses portant sur l'effet notoire d'un changement sur les dimensions. Par exemple, quelle sont les effets (positif ou négatif) en terme de revenu d'un changement de lieu d'un terminal.

Grâce aux règles précédentes, il est possible de calculer le nombre de terminaux (effectif) en tenant compte des événements de changement de dimension ou d'effacement dans la vie du terminal.

Par exemple, le calcul de l'effectif s'effectue de la façon suivante.

Pour une date DJ donnée, le nombre de terminaux est obtenu par la prise en compte des terminaux dont les dates de changement de faits sont à blanc ou postérieures à Dj, dont la date d'effacement est à blanc ou postérieure à DJ et dont les dates de création de séquence (date de première apparition des lignes) sont inférieures ou égales à DJ.

Le comptage des "lignes" résultantes de la sélection s'effectue en regroupant les lignes selon les dimensions.

Les indicateurs dépendent des facteurs de pondération (le nombre de terminaux selon les critères ou axes sous-jacents aux indicateurs).

Par exemple, pour calculer le revenu moyen pour trois jours d'activité D1, D2 et D3 sur une zone géographique, on tient compte du nombre de terminaux de cette zone géographique par jour: N1, N2, N3 et du revenu généré par jour dans cette zone géographique : R1, R2 et R3.

L'effectif Ni correspond au nombre de terminaux dans la zone géographique pour les quels la dimension géographique correspondante est conforme à cette zone à la date Di (pas de changement de dimension géographique grâce à la date de séquence ou changement mais avec une date changement postérieure à Di) ; terminal non effacé à la date Di (date d'effacement à blanc ou postérieure à Di).

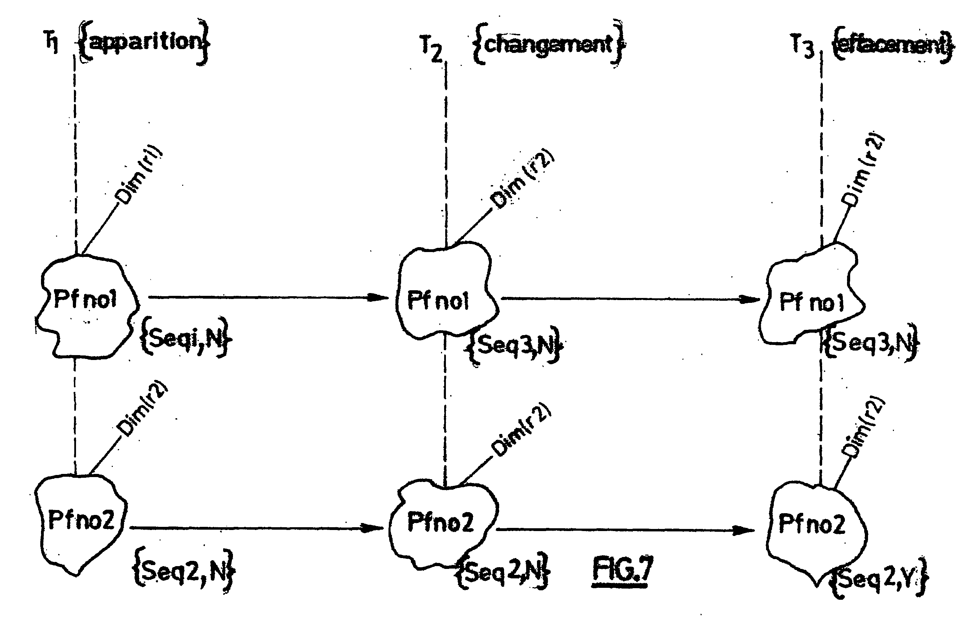

Un exemple de traitement peut avoir la cinématique suivante (figure 7).

Les terminaux Pfno1 et Pfno2 sont supposés n'avoir qu'une seule dimension géographique région R d'attribut r1 et r2.

Les deux Publiphones sont remontés pour la première fois à la date T1 avec PF(Pfno1, Dim(r1), Faits) et PF(Pfno2,Dim(r2), Faits).

A la date T2, le terminal PF(Pfno1,Dim(r1), Faits) change de dimension géographique de r1 à r2.

A la date T3, le terminal PF(Pfno2, Dim(r2), Faits) est constaté effacé.

L'apparition des terminaux dans la base de l'accumulateur s'exprime selon le tableau ci-dessous.

| **Séquence** | **Terminal (Dimensions/Faits)** | **Date de Première apparition** | **Date de Changement** | **Date d'effacement** | **Satut d'effacement** |
|---|---|---|---|---|---|
| Seq_***1*** | PF(Pfno1,Dim(**r1**),Faits) | **T1** | - | - | **N** |
| Seq_***2*** | PF(Pfno2, Dim(r2), Faits) | **T1** | - | - | **N** |

Le changement de dimension pour le terminal Pfno1 s'exprime selon le tableau ci-dessous.

| **Séqu ence** | **Terminal (Dimension/Faits)** | **Date de Première apparition** | **Date de Change ment** | **Date d'efface ment** | **Satut d'efface ment** |
|---|---|---|---|---|---|
| Seq_***1*** | PF(Pfno1,Dim(**r1**),Faits) | T1 | **T2** | - | N |
| Seq_***2*** | PF(Pfno2,Dim(**r2**),Faits) | **T1** | - | - | N |
| Seq_***3*** | PF(Pfno1,Dim(**r2**),Faits) | **T2** | - | - | N |

L'effacement du terminal Pfno2 s'exprime selon le tableau ci-dessous.

| **Séquence** | **Terminal (Dimensions/Faits** | **Date de première apparition** | **Date de Changement** | **Date d'effacement** | **Satut d'effacement** |
|---|---|---|---|---|---|
| Seq_***1*** | PF(Pfno1,Dim(**r1**),Faits) | T1 | T2 | - | N |
| Seq_***2*** | PF(Pfno2,Dim(**r2**),Faits) | T1 | - | T3 | Y |
| Seq_***3*** | PF(Pfno1,Dim(**r2**),Faits) | T2 | - | - | N |

Pour le calcul du nombre de terminaux, on procède (sélection) comme décrit ci-avant par la sélection des "lignes" et puis par le comptage.

La sélection peut s'exprimer selon les tableaux ci-dessous.

| **Séquence** | **Terminal (Dimension/Faits**) | **Selection à la date T1** | **Commentaire** |
|---|---|---|---|
| Seq_***1*** | PF(Pfno1,Dim(**r1**),Faits) | OK | |
| Seq_***2*** | PF(Pfno2,Dim(**r2**),Faits) | OK | |
| Seq_***3*** | PF(Pfno1,Dim(**r2**),Faits) | KO | Date de création de séquence n'est pas inférieure ou égale à la date T1 |

| **Séquence** | **Terminal (Dimensions/Faits)** | **Sélection à la date T2** | **Date de Changement** |
|---|---|---|---|
| Seq_***1*** | PF(Pfno1,Dim(**r1**),Faits) | KO | Date de changement n'est pas inférieure à la date T2 |
| Seq_***2*** | PF(Pfno2,Dim(**r2**),Faits) | OK | |
| Seq_***3*** | PF(Pfno1,Dim(**r2**),Faits) | OK | |

| **Séquence** | **Terminal (Dimensions/Faits)** | **Sélection à la date T2** | **Date de Changement** |
|---|---|---|---|
| Seq_***1*** | PF(Pfno1,Dim(**r1**),Faits) | KO | Date de changement n'est pas inférieure à la date T3 |
| Seq_***2*** | PF(Pfno2,Dim(**r2**),Faits) | KO | Date d'effacement n'est pas postérieur à T3 |
| Seq_***3*** | PF(Pfno1,Dim(**r2**),Faits) | OK | |

Le comptage des terminaux peut s'exprimer selon le tableau ci-dessous.

| **Date** | **Dimension** | **Nombre de terminal/Dimension** | **Nombre total/date** |
|---|---|---|---|
| T1 | Dim(r1) | 1 | 2 |
| | Dim(r2) | 1 | |
| T2 | Dim(r1) | 0 | 2 |
| | Dim(r2) | 2 | |
| T3 | Dim(r1) | 0 | 1 |
| | Dim(r2) | 1 | |

Pour répondre à des questions métiers, on met en place un regroupement thématique des données en informations liées au revenu, à la qualité de service des terminaux, au trafic sur l'ensemble d'un parc du domaine de la téléphonie publique.

Ces regroupements sont effectués selon une matrice «indicateurs/temps/axes d'analyse ». Ces regroupements sont fonctionnels (Finance, Trafic, Qualité du Service et moyen de paiement).

Par exemple, un magasin de données relatif au trafic regroupe toutes les informations autour du trafic généré sur un parc de téléphones publics. Les données sont organisées par agrégation horaire, journalière, mensuelle et annuelle en fonction des axes d'analyses ou dimensions.
Par exemple, un magasin de données « revenu » regroupe toutes les informations financières générées sur un parc de téléphones publics. Les données sont organisées par agrégation horaire, journalière, mensuelle et annuelle en fonction des axes d'analyses ou dimensions.

Par exemple, un magasin de données « qualité de service » regroupe toutes les informations liées au niveau de service des terminaux observées sur un parc de téléphones publics. Les données sont organisées par agrégation horaire, journalière, mensuelle et annuelle en fonction des axes d'analyses ou dimensions.

Par exemple, un magasin de données « moyen de paiement » regroupe toutes les informations liées au moyen de paiement (carte prépayée, pièces monétaire, etc....) des terminaux d'un parc de téléphones publics. Les données sont organisées par agrégation horaire, journalière, mensuelle et annuelle en fonction des axes d'analyses ou dimensions.

En outre, il est possible d'établir des calculs choisis sur les indicateurs.

Les indicateurs pré calculés sont:
Durée d'Alarme
Durée moyenne d'alarme par terminal
Nombre moyen d'alarme par terminal
Nombre d'appel moyen par terminal
Nombre de terminal
Revenu moyen par terminal
Durée d'appel moyenne par terminal
Durée d'appel
Durées qualitatives du terminal (service, pannes)
Nombre d'alarme
Revenu par moyen de paiement

Les principales segmentation des informations du domaine de la téléphonie publique :

| **Entité de l'accumulateur** |
|---|
| Fiches du terminal |
| Faits alarmes |
| Fait des Listes d'opposition |
| Faits Compteurs statistiques du terminal |
| Faits changement de statut |
| Faits Transactions |
| Faits Transactions par moyen de paiement |

| **Entité d'agrégation dans les magasins** |
|---|
| Alarmes par heure |
| Alarmes par jour |
| Alarmes par mois |
| Alarmes par an |
| Revenu généré par heure |

| **Entité d'agrégation dans les magasins** |
|---|
| Revenu généré par jour |
| Revenu généré par mois |
| Revenu généré par an |
| Statuts par heure |
| Statuts par jour |
| Statuts par mois |
| Statuts par an |
| Trafic par heure |
| Trafic par jour |
| Trafic par mois |
| Trafic par an |
| Moyen de paiement par heure |
| Moyen de paiement par jour |
| Moyen de paiement par mois |
| Moyen de paiement par an |
| |
| Nombre de terminaux par jour par Dimension |
| Nombre de terminaux par mois par Dimension |
| Nombre de terminaux par an par Dimension |

Bien évidemment d'autres modes de réalisation peuvent être mis en oeuvre dans le cadre de l'invention.

## Revendications

1. Procédé de traitement de données échangées entre une pluralité de terminaux de service (10) et au moins un serveur de supervision (5), les terminaux de service (10) étant répartis géographiquement dans un réseau de communication et aptes à communiquer au serveur de supervision (5) des données dimensionnelles relatives à l'organisation et/ou l'installation desdits terminaux et des données factuelles relatives à l'activité desdits terminaux et/ou à des événements choisis, **caractérisé en ce qu'**il comprend en outre les étapes suivantes :
-i) collecter au niveau du serveur de supervision (5) les données dimensionnelles et les données factuelles de chaque terminal à une fréquence choisie,
-ii) pour chaque terminal, comparer les données dimensionnelles ainsi collectées avec les données dimensionnelles collectées à la séquence précédente,
-iii) en cas de changement des données dimensionnelles, traiter les données factuelles selon des règles de gestion choisies.

2. Procédé selon la revendication 1, **caractérisé en ce que** les règles de gestion sont dépendantes des changements des données dimensionnelles.

3. Procédé selon la revendication 1 ou la revendication 2, **caractérisé en ce que** les données dimensionnelles appartiennent au groupe formé par les caractéristiques géographiques du terminal, les caractéristiques du type de terminal, les caractéristiques de localisation du terminal, les caractéristiques du groupe de maintenance ou d'exploitant du terminal ainsi que les caractéristiques du type d'installation du terminal.

4. Procédé selon l'une des revendications 1 à 3, **caractérisé en ce que** les données factuelles appartiennent au groupe formé par les alarmes, les compteurs, les statuts, les transactions, les informations temporelles des faits.

5. Procédé selon l'une des revendications précédentes, **caractérisé en ce que** comprend des règles de traitement de données relatives à la première apparition du terminal dans le traitement, à l'effacement du terminal, à la gestion des changements de données dimensionnelles et au calcul d'indicateurs.

6. Dispositif de traitement de données échangées entre une pluralité de terminaux de services (10) et au moins un serveur de supervision (5), les terminaux de services étant répartis géographiquement dans un réseau de communication et aptes à communiquer au serveur de supervision des données dimensionnelles relatives à l'organisation et/ou l'installation desdits terminaux et des données factuelles relatives à l'activité desdits terminaux et/ou à des événements choisis, **caractérisé en ce que** le dispositif de traitement comprend:
- des premiers moyens de traitement formant collecteur (12, 14, 16, 18) pour collecter au niveau du serveur de supervision (5) les données dimensionnelles et les données factuelles de chaque terminal à une fréquence choisie,
- des seconds moyens de traitement formant accumulateur (20), aptes, pour chaque terminal (5), à comparer les données dimensionnelles ainsi collectées avec les données dimensionnelles collectées à la séquence précédente,
- des troisièmes moyens de traitement formant présentateur (30), aptes en cas de changement des données dimensionnelles, à traiter les données factuelles selon des règles de gestion dépendantes des changements des données dimensionnelles.

7. Dispositif selon la revendication 6, **caractérisé en ce que** les seconds moyens de traitement (20) gèrent les historiques de changements de données factuelles et/ou dimensionnelles.

8. Dispositif selon la revendication 6, **caractérisé en ce que** les troisièmes moyens de traitement (30) présentent les données d'une manière appropriée permettant de former des requêtes spécifiques au domaine des terminaux, par exemple la téléphonie.

9. Dispositif selon l'une des revendications 6 à 8, **caractérisé en ce qu'**en cas de rupture de la chaîne de collection/alimentation, le dispositif de traitement comprend en outre des automates d'états (12) permettant la reprise partielle ou totale du traitement depuis les états concernés.

10. Dispositif selon l'une des revendications 6 à 9, **caractérisé en ce que** les premiers moyens de traitement (12, 14, 16, 18) sont aptes à extraire les informations de manière différentielle du serveur (5) et de les mettre à la disposition des seconds moyens de traitement (20).

11. Dispositif selon l'une des revendications 6 à10, **caractérisé en ce que** la collection différentielle est faite au niveau du module d'extraction (12), résidant sur chaque serveur PMS (5) et s'exécutant de manière asynchrone, en mémorisant les états de la dernière extraction de chaque donnée factuelle pour chaque terminal (10), ce qui permet sur deux extractions consécutives, de prendre en compte uniquement le différentiel.

## Claims

1. A method of processing data exchanged between a plurality of service terminals (10) and at least one supervision server (5), said service terminals (10) being distributed geographically in a communication network and adapted for delivering to the supervision server (5) dimensional data regarding the organization and/or the installation of said terminals and factual data regarding the activity of said terminals and/or selected events, **characterized in that** it further involves the following steps:
-i) collecting on the level of the supervision server (5) the dimensional data and the factual data of each terminal at a selected frequency,
-ii) comparing for each terminal the dimensional data thus collected to the dimensional data collected in the previous sequence,
-iii) in case of a change in the dimensional data, processing the factual data according to selected management rules.

2. The method as set forth in claim 1, **characterized in that** the management rules depend on the changes in the dimensional data.

3. The method as set forth in claim 1 or claim 2, **characterized in that** the dimensional data belong to the group formed by the geographical features of the terminal, the features of the terminal type, the terminal location features, the features of the maintenance or carrier group of the terminal as well as by the features of the terminal's installation type.

4. The method as set forth in any one of the claims 1 to 3, **characterized in that** the factual data belong to the group formed by the alarms, the counters, the status, the transactions, the temporal factual information.

5. The method as set forth in any one of the previous claims, **characterized in that** it comprises data processing rules regarding the first involvement of the terminal in the process, the blanking of the terminal, the management of the changes in the dimensional data and the computation of indicators.

6. An apparatus for processing data exchanged between a plurality of service terminals (10) and at least one supervision server (5), said service terminals being distributed geographically in a communication network and adapted for delivering to the supervision server dimensional data regarding the organization and/or the installation of said terminals and factual data regarding the activity of said terminals and/or selected events, **characterized in that** the processing apparatus includes:
- first processing means in the form of a collector (12, 14, 16, 18) for collecting, on the level of the supervision server (5), the dimensional data and the factual data of each terminal at a selected frequency,
- second processing means in the form of an accumulator (20) for comparing, for each terminal (10), the thus collected dimensional data to the dimensional data collected in the previous sequence,
- third processing means in the form of a presenter (30) for processing, in case of a change in the dimensional data, the factual data in accordance with management rules depending on the changes in the dimensional data.

7. The apparatus as set forth in claim 6, **characterized in that** the second processing means (20) manage the change histories of factual and/or dimensional data.

8. The apparatus as set forth in claim 6, **characterized in that** the third processing means (30) present the data in an appropriate manner allowing for forming requests specific to the field of the terminals, such as the telephony.

9. The apparatus as set forth in any one of the claims 6 through 8, **characterized in that**, in the event the collecting/supplying chain breaks, the processing apparatus further comprises finite-state machines (12) allowing for partially or completely resuming processing from the states concerned.

10. The apparatus as set forth in any one of the claims 6 through 9, **characterized in that** the first processing means (12, 14, 16, 18) are adapted for differentially extracting information from the server (5) and for making them available for the second processing means (20).

11. The apparatus as set forth in any one of the claims 6 through 10, **characterized in that** the differential collection occurs on the level of the extraction module (12), which resides on each PMS server (5) and executes itself asynchronously, the states of the last extraction of each factual data being stored for each terminal (10), this allowing, in two consecutive extractions, taking into account the differential only.

## Patentansprüche

1. Verfahren zur Verarbeitung von zwischen mehreren Dienstendgeräten (10) und mindestens einem Überwachungsserver (5) ausgetauschten Daten, wobei die Dienstendgeräte (10) geografisch in einem Kommunikationsnetzwerk verteilt sind und geeignet sind, an den Überwachungsserver (5) Dimensionsdaten betreffend die Organisation und/oder die Installation der Endgeräte und Faktdaten betreffend die Aktivität der Endgeräte und/oder gewählte Ereignisse zu kommunizieren, **dadurch gekennzeichnet, dass** es ferner die folgenden Schritte umfasst:
- i) an dem Überwachungsserver (5) die Dimensionsdaten und die Faktdaten jedes Endgeräts bei einer gewählten Frequenz sammeln;
- ii) für jedes Endgerät die derart gesammelten Dimensionsdaten mit den bei der vorigen Sequenz gesammelten Dimensionsdaten vergleichen;
- bei Änderung der Dimensionsdaten die Faktdaten gemäß gewählten Verwaltungsvorschriften verarbeiten.

2. Verfahren nach Anspruch 1, **dadurch gekennzeichnet, dass** die Verwaltungsvorschriften von den Änderungen der Dimensionsdaten abhängig sind.

3. Verfahren nach Anspruch 1 oder nach Anspruch 2, **dadurch gekennzeichnet, dass** die Dimensionsdaten zu der Gruppe gehören, die durch die geografischen Eigenschaften des Endgeräts, die Eigenschaften des Endgerättyps, die Lokalisierungseigenschaften des Endgeräts, die Eigenschaften der Wartungs- oder Betreibergruppe des Endgeräts sowie die Eigenschaften des Installationstyps des Endgeräts gebildet ist.

4. Verfahren nach einem der Ansprüche 1 bis 3, **dadurch gekennzeichnet, dass** die Faktdaten zu der Gruppe gehören, die durch die Alarme, die Zähler, die Stati, die Transaktionen, die Zeitinformationen der Fakten gebildet ist.

5. Verfahren nach einem der vorhergehenden Ansprüche, **dadurch gekennzeichnet, dass** es Vorschriften zur Verarbeitung von Daten betreffend das erste Auftreten des Endgeräts in der Verarbeitung, das Löschen des Endgeräts, die Verwaltung der Änderungen von Dimensionsdaten und die Berechnung von Indikatoren umfasst.

6. Vorrichtung zur Verarbeitung von zwischen mehreren Dienstendgeräten (10) und mindestens einem Überwachungsserver (5) ausgetauschten Daten, wobei die Dienstendgeräte (10) geografisch in einem Kommunikationsnetzwerk verteilt sind und geeignet sind, an den Überwachungsserver (5) Dimensionsdaten betreffend die Organisation und/oder die Installation der Endgeräte und Faktdaten betreffend die Aktivität der Endgeräte und/oder gewählte Ereignisse zu kommunizieren, **dadurch gekennzeichnet, dass** die Vorrichtung Folgendes umfasst:
- erste Verarbeitungsmittel, die einen Kollektor (12, 14, 16, 18) bilden, um an dem Überwachungsserver (5) die Dimensionsdaten und die Faktdaten jedes Endgeräts bei einer gewählten Frequenz zu sammeln;
- zweite Verarbeitungsmittel, die einen Akkumulator (20) bilden und geeignet sind, für jedes Endgerät (5) die derart gesammelten Dimensionsdaten mit den bei der vorigen Sequenz gesammelten Dimensionsdaten zu vergleichen;
- dritte Verarbeitungsmittel, die einen Präsentator (30) bilden und geeignet sind, bei Änderung der Dimensionsdaten die Faktdaten gemäß Verwaltungsvorschriften zu verarbeiten, die von den Änderungen der Dimensionsdaten abhängig sind.

7. Vorrichtung nach Anspruch 6, **dadurch gekennzeichnet, dass** die zweiten Verarbeitungsmittel (20) die Histories von Änderungen von Fakt- und/oder Dimensionsdaten verwalten.

8. Vorrichtung nach Anspruch 7, **dadurch gekennzeichnet, dass** die dritten Verarbeitungsmittel (30) die Daten auf eine geeignete Weise präsentieren, die es ermöglicht, Anfragen zu bilden, die für das Gebiet der Endgeräte, beispielsweise die Telefonie spezifisch sind.

9. Vorrichtung nach einem der Ansprüche 6 bis 8, **dadurch gekennzeichnet, dass** bei Unterbrechung der Sammlungs- / Versorgungskette die Verarbeitungsvorrichtung ferner Zustandsautomaten (12) umfasst, die die teilweise oder vollständige Wiederaufnahme der Verarbeitung von den betreffenden Zuständen aus ermöglicht.

10. Vorrichtung nach einem der Ansprüche 6 bis 9 **dadurch gekennzeichnet, dass** die ersten Verarbeitungsmittel (12, 14, 16, 18) geeignet sind, die Informationen differenziell aus dem Server (5) auszulesen und sie den zweiten Verarbeitungsmitteln (20) zur Verfügung zu stellen.

11. Vorrichtung nach einem der Ansprüche 6 bis 10, **dadurch gekennzeichnet, dass** die differenzielle Sammlung an dem Auslesemodul (12) erfolgt, das auf jedem Server PMS (5) residiert und asynchron läuft, und dabei die Zustände der letzten Auslesung jedes Faktdatums für jedes Endgerät (10) gespeichert werden, was über zwei aufeinanderfolgende Auslesungen die Berücksichtigung lediglich des Differenzials ermöglicht.
